# EUROPÄISCHE PATENTSCHRIFT

(11) **EP 1 651 420 B1**
(45) Veröffentlichungstag und Bekanntmachung des Hinweises auf die Patenterteilung: **03.09.2008**
(21) Anmeldenummer: 04737154.7
(22) Anmeldetag: 24.06.2004
(51) Int. Cl.: B29C 47/08

(54) **VERFAHREN UND VORRICHTUNG ZUR HERSTELLUNG VON KUNSTSTOFFPROFILEN**
METHOD AND DEVICE FOR THE PRODUCTION OF PLASTIC PROFILES
PROCEDE ET DISPOSITIF POUR PRODUIRE DES PROFILES EN PLASTIQUE

(30) Priorität: 27.06.2003 AT 4502003 U
(43) Veröffentlichungstag der Anmeldung: 03.05.2006
(73) Patentinhaber: Technoplast Kunststofftechnik GmbH & Co KG, 4563 Micheldorf (AT)
(72) Erfinder: SCHWAIGER, Meinhard, A-4040 Linz (AT)
(74) Vertreter: Babeluk, Michael
(86) Internationale Anmeldenummer: PCT/AT2004/000221
(87) Internationale Veröffentlichungsnummer: WO 2005/000557

(56) Entgegenhaltungen:
- EP-A- 0 316 122
- CH-A- 689 715
- DE-A- 4 208 190
- FR-A- 2 601 619
- US-A1- 2002 096 807
- PATENT ABSTRACTS OF JAPAN Bd. 0070, Nr. 31 (M-192), 8. Februar 1983 (1983-02-08) & JP 57 187222 A (NIPPON SEIKOSHO KK), 17. November 1982 (1982-11-17)
- PATENT ABSTRACTS OF JAPAN Bd. 0081, Nr. 91 (M-322), 4. September 1984 (1984-09-04) & JP 59 081147 A (NITSUSEI JIYUSHI KOGYO KK), 10. Mai 1984 (1984-05-10)
- PATENT ABSTRACTS OF JAPAN Bd. 0132, Nr. 06 (M-826), 16. Mai 1989 (1989-05-16) & JP 1 030728 A (SEKISUI CHEM CO LTD), 1. Februar 1989 (1989-02-01)

## Beschreibung

Die Erfindung betrifft ein Verfahren zur Herstellung von Kunststoffprofilen gemäß dem Oberbegriff von Patentanspruch 1.

In der industriellen Profilextrusion kommt aus wirtschaftlichen Gründen der Flexibilität eine bedeutende Rolle zu. Flexibilität bedeutet unter anderem, dass eine Produktionslinie zur Herstellung von Kunststoffprofilen möglichst rasch von der Herstellung eines Profils auf die Herstellung eines anderen Profils umgerüstet werden kann. Bei einem solchen Wechsel werden im Allgemeinen die Extrusionswerkzeugdüse und die Kalibrierwerkzeuge ausgetauscht. Für den Wechsel der Kalibrierwerkzeuge wird im Allgemeinen ein Kran benützt, der im Deckenbereich der betreffenden Produktionshalle vorgesehen ist. Beim Umbau der Extrusionslinie wird dabei zunächst die Extrusionswerkzeugdüse vom Extruder getrennt, am Kran aufgehängt und zu einer Lager- oder Serviceposition verfahren. Danach wird die zweite Extrusionswerkzeugdüse vom Kran aufgenommen und zum Extruder transportiert, um dort montiert zu werden. Insbesondere dann, wenn der Kran ausgelastet ist, können durch diese Manipulationen Wartezeiten entstehen, die den Produktionswechsel in unerwünschter Weise verlangsamen. Da die neue Extrusionswerkzeugdüse üblicherweise vorgewärmt wird, um den Anlaufvorgang der Extrusion zu beschleunigen, kann es durch die beschriebenen Verzögerungen dazu kommen, dass die Extrusionswerkzeugdüse auskühlt, wodurch die Produktion von Ausschuss erhöht wird. Kalibrierwerkzeuge sind mit Kühlwasser zur Wärmeabfuhr aus dem extrudierten Profil sowie mit Vakuum zur exakten Formgebung beaufschlagt. Beim Kalibrierwerkzeugwechsel sind mittels spezieller Kupplungen Kühlwasserschläuche und Vakuumschläuche jeweils zu lösen bzw. anzukuppeln, dazu ist zusätzlich die Kühlwasserzuführung und die Vakuumversorgung abzustellen und neu anzustellen - ein Vorgang, der zusätzlich Zeit in Anspruch nimmt.

Die DE 299 17 344 U zeigt eine Vorrichtung zum Kalibrieren extrudierter Profile, die quer zur Extrusionsrichtung verfahrbare Werkzeughalterungen aufweist. Damit ist ein Werkzeugwechsel zwar in relativ schneller Weise möglich, was die Stillstandszeiten verringert, aber eine solche Vorrichtung macht die Extrusionslinie breit und hat daher einen großen Platzbedarf. Darüber hinaus werden die für den Werkzeugwechsel erforderlichen Arbeitsvorgänge nicht eingespart, sondern nur zeitlich verlagert, um die Produktion weniger zu stören. Weiters kann die Extrusionsdüse nur in herkömmlicher Weise gewechselt werden.

Die US 5,525,052 A beschreibt einen Extruder mit einer Wechselvorrichtung für die Extrusionsdüse. Für die Extrusion von Kunststoffprofilen ist eine solche relativ aufwendige Vorrichtung nicht einsetzbar, da aufgrund der im Extruder herrschenden Druckverhältnisse die mechanische Stabilität nicht gewährleistet werden kann.

Die EP 0 316 122 A beschreibt eine Wechselvorrichtung für eine Extrusionswerkzeugdüse, mit der die Rüstzeiten insbesondere dann verringert werden können, wenn mehrere Werkzeugwechsel in schneller Folge hintereinander vorgenommen werden müssen. Eine für Kalibrierwerkzeuge besonders geeignete Lösung wird hier jedoch nicht angeboten.

Die JP 57 187 222 A offenbart eine Vorrichtung zum Werkzeugwechsel, die einen Hubtisch beinhaltet, wobei die Arbeitseinsparung und die erzielbare Verkürzung von Rüstzeiten beschränkt sind.

Weiters ist in der FR 2 601 619 A eine Vorrichtung zur Manipulation von Extrusionswerkzeugdüsen bekannt. Dabei können bis zu zwei Werkzeugdüsen auf einem Drehgestell gelagert und manipuliert werden. Der Abbau einer alten Düse und der Einbau einer neuen Düse sind jedoch dabei stets getrennte Arbeitsschritte, so dass der Aufwand und die Rüstzeiten nicht unter ein gewisses Mindestmaß abgesenkt werden können.

Aufgabe der vorliegenden Erfindung ist es, die beschriebenen Zeitverluste zu vermeiden und ein Verfahren zur Herstellung von Kunststoffprofilen anzugeben, bei denen eine erhöhte Flexibilität durch Erreichung rascher Produktionswechsel gegeben ist. Insbesondere soll dabei auf die besonderen Umstände bei der Manipulation von Kalibrierwerkzeugen, also Trockenkalibern und Kalibriertanks Rücksicht genommen werden.

Erfindungsgemäß werden diese Aufgaben durch die Merkmale von Patentanspruch 1 gelöst.

Wesentlich an dem erfindungsgemäßen Verfahren ist, dass beim Entfernen des ersten Kalibrierwerkzeuges vom Kalibriertisch Kühlwasser- und/oder Vakuumversorgungsleitungen automatisch vom ersten Kalibrierwerkzeug getrennt und nach Verbringen des zweiten Kalibrierwerkzeuges in die Andockstellung zum Kalibriertisch automatisch an das zweite Kalibrierwerkzeug angeschlossen werden.

Einweiterer wesentlicher Aspekt der Erfindung ist es, dass beim Wechsel der Kalibrierwerkzeuge das zweite Kalibrierwerkzeug bereits in unmittelbarer Nähe des Kalibriertischs bereitgestellt wird, bevor das erste Kalibrierwerkzeug demontiert wird. Ein weiterer wesentlicher Vorteil der Erfindung liegt darin, dass das erste Manipulationsgerät selbst eine Hebevorrichtung enthält, die es ermöglicht, die aus Gewichtsgründen händisch nicht manipulierbare Werkzeuge in die entsprechende Andockposition zu bringen.

Besonders begünstigt ist es, wenn die Hebevorrichtung einen ersten Hubarm zur Aufnahme eines ersten Kalibrierwerkzeugs und einen zweiten Hubarm zur Aufnahme eines zweiten Kalibrierwerkzeugs aufweist, und insbesondere wenn der erste und der zweite Hubarm unabhängig voneinander verfahrbar sind. Da die Hubarme präziser steuerbar sind als der Kran, wird der eigentliche Vorgang des Befestigens des zweiten Kalibrierwerkzeugs zusätzlich beschleunigt.

Es ist besonders vorteilhaft, wenn weiters eine zweite Manipulationseinrichtung für ein Kalibrierwerkzeug vorgesehen ist, welche vorzugsweise eine Kalibrierwerkzeug-Hebevorrichtung und eine Verschiebeeinheit für das Kalibrierwerkzeug, beispielsweise mit Rollen- oder Gleitlagerung aufweist. Dabei kann weiters vorgesehen sein, dass die Kalibrierwerkzeug-Hebevorrichtung einen ersten Hubarm zur Aufnahme eines ersten Kalibrierwerkzeuges und einen zweiten Hubarm zur Aufnahme eines zweiten Kalibrierwerkzeuges aufweist, wobei vorzugsweise der erste und der zweite Hubarm der Kalibrierwerkzeug-Hebevorrichtung unabhängig voneinander verfahrbar sind. Die zweite Manipulationseinrichtung ist vorteilhafterweise am Kalibriertisch andock- und fixierbar ausgebildet. Somit kann diese mit dem Kalibriertisch in Extrusionsrichtung verfahren werden.

Eine Erleichterung der Manipulation ist insbesondere dadurch gegeben, dass das erste und/oder zweite Manipulationsgerät selbstfahrend ausgebildet ist.

Der Wechsel des Kalibrierwerkzeuges erfolgt dadurch, dass das erste Kalibrierwerkzeug durch eine erste Kalibrierwerkzeug-Hebevorrichtung des Kalibrierwerkzeug-Manipulationsgerätes vom Kalibriertisch entfernt wird und das zweite Kalibrierwerkzeug durch eine zweite Kalibrierwerkzeug-Hebevorrichtung des Kalibrierwerkzeug-Manipulationsgerätes in die Andockstellung zum Kalibriertisch gebracht wird. Die Entnahme des ersten Kalibrierwerkzeuges und das Zubringen des zweiten Kalibrierwerkzeugs kann dabei von der gleichen Längsseite oder von unterschiedlichen Längsseiten des Kalibriertisches erfolgen. Im zweiten Fall ist der Kalibriertisch derart ausgeführt, dass sowohl auf der Bedienerseite, als auch auf der von der Bedienerseite abgewandten Seite keine am Kalibriertisch fest angebauten Elemente über die Oberkante des so genannten Aufspannrahmens hinausragen.

Bei einem an Kühl- und/oder Vakuumversorgungsleitungen anschließbaren Kalibrierwerkzeug ist es besonders vorteilhaft, wenn beim Entfernen des ersten Kalibrierwerkzeuges vom Kalibriertisch Kühl- und/oder Vakuumversorgungsleitungen automatisch vom ersten Kalibrierwerkzeug getrennt und nach Verbringen des zweiten Kalibrierwerkzeuges in die Andockstellung zum Kalibriertisch automatisch an das zweite Kalibrierwerkzeug angeschlossen werden. Somit kann Zeit zum manuellen Ab- und Anschließen der Leitungen eingespart werden. Zahlreiche Schlauchverbindungen für die Kühl- und Vakuumversorgung entfallen, wenn die automatische Kupplungseinheit auf einem Aufspannrahmen des Kalibriertisches angeordnet ist. Die Kupplungseinheit weist dabei eine Vielzahl an zapfenartigen Kupplungen auf, die im entkoppelten Zustand dicht verschlossen sind. In der Grundplatte des Kalibrierwerkzeuges sind spezielle Öffnungen vorgesehen, welche die zapfenartigen Kupplungen aufnehmen können. Wenn das Kalibrierwerkzeug auf dem Aufspannrahmen aufgesetzt wird, werden gleichzeitig mittels der zapfenartigen Kupplungen die Kühl- und Vakuumversorgungen automatisch hergestellt, ohne dass eine Schlauchverbindung manuell gekoppelt werden müsste. Der Kalibriertisch ist auf die maximal erforderliche Anzahl von Kühl- und Vakuumanschlüssen vorbereitet, während das Kalibrierwerkzeug eine individuelle Anzahl von Kühl- und Vakuumanschlussöffnungen in der Grundplatte aufweisen kann. Die für die jeweilige Profilproduktion erforderlichen Anschlussverbindungen werden durch z.B. einen speziellen Dorn in der Grundplatte aktiviert, während die nicht benötigten Anschlussverbindungen inaktiv bleiben (z.B. Öffnungsbohrung ohne Dorn). Das zweite Kalibrierwerkzeug wird durch vertikales Hochfahren des Aufspannrahmens auf diesem exakt positioniert und fixiert, wobei automatisch die erforderlichen Verbindungen mit den Kühl- und Vakuumversorgungsleitungen hergestellt werden.

Eine besonders bevorzugte Ausführungsvariante der Erfindung sieht vor, dass die Querverschiebeeinheit zwischen dem Kalibrierwerkzeug und dem Aufspannrahmen des Kalibriertisches angeordnet ist und durch vertikales Absenken des Aufspannrahmens das Kalibrierwerkzeug auf der Querverschiebeeinheit aufsitzt und dadurch die Kühlwasser- und Vakuumversorgungsleitungen getrennt werden. Auf diese Weise ist es möglich, die händisch durchzuführenden Manipulationen zu minimieren und den Wechselvorgang zu automatisieren.

Die Erfindung wird im Folgenden anhand der Figuren näher erläutert. Es zeigen:
- Fig. 1: schematisch eine Extrusionsanlage in einer Schrägansicht;
- Fig. 2: diese Extrusionsanlage in einem Grundriss;

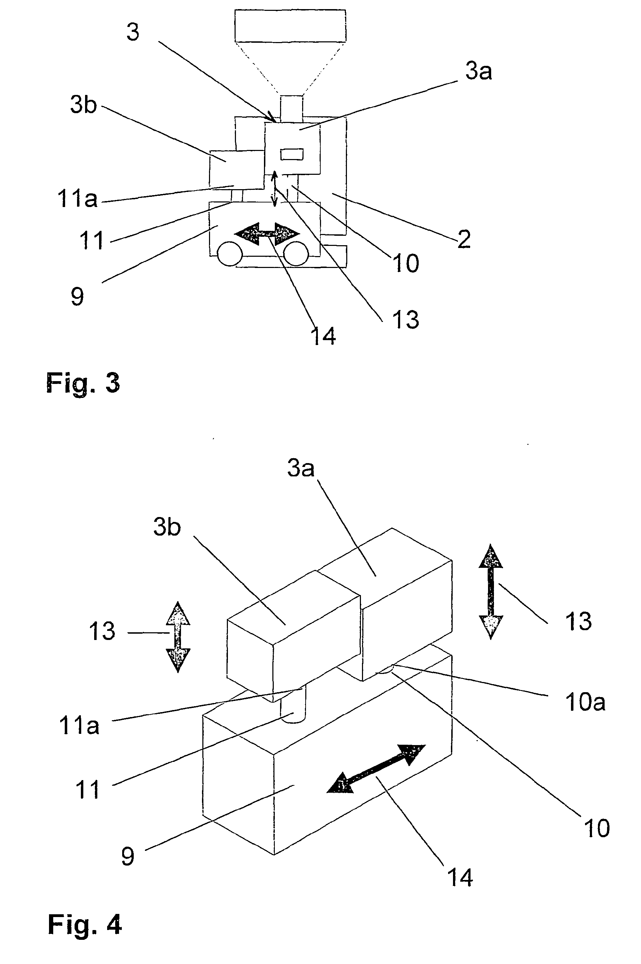

- Fig. 3: einen Wechselvorgang einer Extrusionswerkzeugdüse;
- Fig. 4: ein erstes Manipulationsgerät in einer Schrägansicht;
- Fig. 5: einen Andockvorgang eines Kalibrierwerkzeuges an den Kalibriertisch;
- Fig. 6: einen Wechselvorgang eines Kalibrierwerkzeuges mit einem Kalibrierwerkzeug-Manipulationsgerät, ausgeführt mit zwei Kalibrierwerkzeugaufnahmehebearmen;
- Fig. 7: eine Ausführungsvariante mit einem Kalibrierwerkzeug-Manipulationsgerät, ausgeführt ohne Kalibrierwerkzeugaufnahmehebearme, jedoch mit einer Kalibrierwerkzeugverschiebeeinheit; und
- Fig. 8: eine automatische Kupplungseinheit im Schnitt.

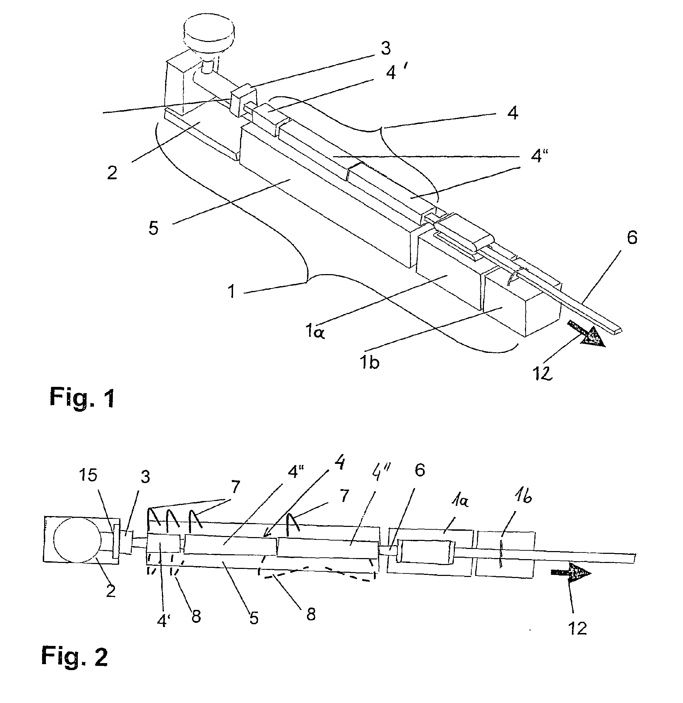

Die in den Fig. 1, Fig. 2 und Fig. 5 dargestellte Extrusionsanlage 1 besteht aus einem Extruder 2, einer Extrusionswerkzeugdüse 3, einem Kalibrierwerkzeug 4 mit einem Trockenkalibrator 4' und einem Nasskalibrator 4" und einem Kalibriertisch 5, einem Profilraupenabzug 1a und einer Profilsäge 1b und dient zur Herstellung eines Profilstranges 6 aus Kunststoff, beispielsweise eines Rohres, eines Fensterprofils oder dgl. Wie in Fig. 2 dargestellt ist, ist das Kalibrierwerkzeug 4 an Kühlwasserverbindungsleitungen 7 und an Vakuumverbindungsleitungen 8 am Kalibriertisch 5 angeschlossen. Diese Kühlwasser- und Vakuumverbindungsleitungen 7, 8 müssen bei jedem Wechsel des Kalibrierwerkzeuges 4 bei bekannten Extrusionsanlagen 1 vom aktuellen ersten Kalibrierwerkzeug 4 manuell entkoppelt und an ein neues zweites Kalibrierwerkzeug angeschlossen werden. Dabei ist die Anzahl der Verbindungsleitungen individuell von Kalibrierwerkzeug zu Kalibrierwerkzeug unterschiedlich.

Um einen einfachen und raschen Wechsel der Extrusionswerkzeugdüse 3 zu ermöglichen, wird gemäß eines nicht vom Schutzbereich umfassten Verfahrens während noch mit der ersten Extrusionswerkzeugdüse 3a produziert wird, die für die nachfolgende Produktion vorgesehene Extrusionswerkzeugdüse 3b auf einem fahrbaren ersten Manipulationsgerät 9 montiert und auf Vorwärmtemperatur gebracht bzw. gehalten. Die zweite Extrusionswerkzeugdüse 3b wird mit dem ersten Manipulationsgerät 9 zwischen Extruder 2 und Kalibriertisch 5 in Querrichtung 14 zur Extrusionsrichtung 12 verbracht, derart, dass sich der erste Hubarm 10a des ersten Manipulationsgerätes 9 unterhalb der ersten Extrusionswerkzeugdüse 3a befindet. Der erste Hubarm 10a wird mit der ersten Düsenhebevorrichtung 10 in vertikaler Richtung 13 bis zur ersten Extrusionswerkzeugdüse 3a gefahren. Nach Abstellen der Extrusionsanlage 1 wird die erste Extrusionswerkzeugdüse 3a vom Extruder 2, beispielsweise über eine Spannflanschverbindung, getrennt, wobei die erste Extrusionswerkzeugdüse 3a zur Gänze von der ersten Düsehebevorrichtung 10 des ersten Manipulationsgerätes 9 gehalten wird. Danach wird die Position der ersten und der zweiten Extrusionswerkzeugdüse 3a, 3b in Querrichtung 14 derart verschoben, dass die zweite Extrusionswerkzeugdüse 3b in die Position des Extruderflansches 15 verbracht wird. Über die zweite Düsenhebevorrichtung 11 wird der zweite Hubarm 11a mit der zweiten Extrusionswerkzeugdüse 3b in die richtige Montageposition gehoben. Nach Fixierung der zweiten Extrusionswerkzeugdüse 3b am Extruder 2 sowie der Koppelung der nicht weiter dargestellten Energie- und Sensorleitungen des Extruders 2 mit der zweiten Extrusionswerkzeugdüse 3b kann die Extrusionsanlage 1 wieder hochgefahren werden.

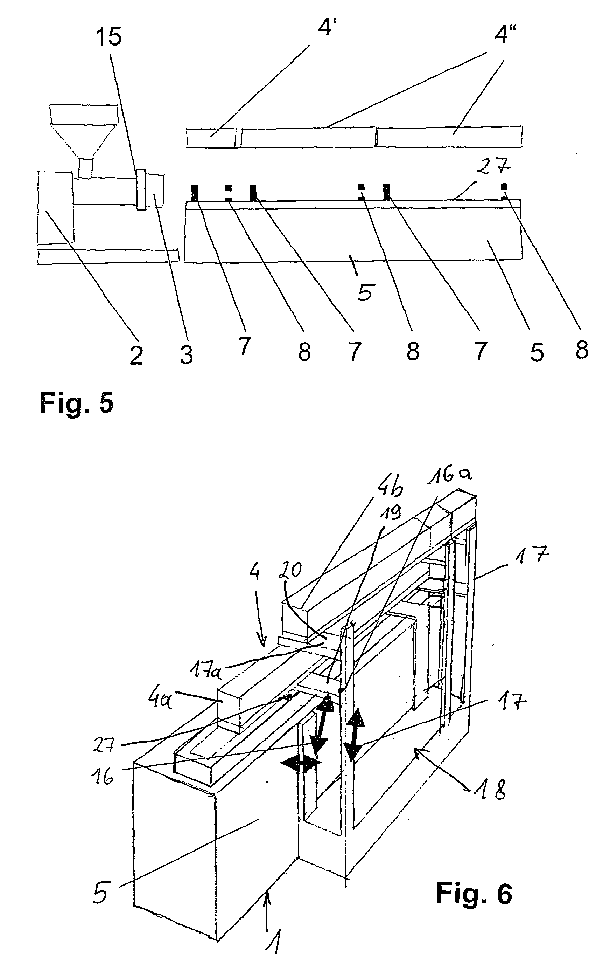

Gleichzeitig mit dem Wechsel der Extrusionswerkzeugdüse 3 kann auch ein Wechsel des Kalibrierwerkzeuges 4 durchgeführt werden, wie in Fig. 5 und Fig. 6 schematisch dargestellt ist. Dabei wird während der noch laufenden Produktion mit dem ersten Kalibrierwerkzeug 4a das für die nachfolgende Produktion erforderliche zweite Kalibrierwerkzeug 4b auf dem Hubarm 17a einer zweiten Kalibrierwerkzeug-Hebevorrichtung 17 eines frei fahrbaren Kalibrierwerkzeug-Manipulationsgerätes 18 zentriert und abgelegt. Das zweite Manipulationsgerät 18 mit dem zweiten Kalibrierwerkzeug 4b wird zum Kalibriertisch 5 der Extrusionsanlage 1 gefahren und an den Kalibriertisch 5 angekoppelt und fixiert. Nach dem Abstellen der aktuellen Produktion wird das erste Kalibrierwerkzeug 4a mit dem Aufspannrahmen 27 des Kalibriertisches 5 in eine für die Übernahme geeignete Höhenposition verfahren und der Hubarm 16a einer ersten Kalibrierwerkzeug-Hebevorrichtung 16 des Kalibrierwerkzeug-Manipulationsgerätes 18 unterhalb des ersten Kalibrierwerkzeuges 4a geschoben. Kühlwasserverbindungsleitungen 7 und Vakuumverbindungsleitungen 8 werden gelöst, gegebenenfalls wird die Verbindung Kalibrierwerkzeug 4 - Kalibriertisch 5 gelöst. Das erste Kalibrierwerkzeug 4a wird geringfügig durch die erste Kalibrierwerkzeug-Hebevorrichtung 16 angehoben und anschließend mit zumindest einer ersten Verschiebeeinheit 19 entlang des ersten Hubarmes 16a in eine durch eine rückwärtige Position definierte Grundstellung gebracht. Der zweite Hubarm 17a mit dem zweiten Kalibrierwerkzeug 4b wird über die zweite Kalibrierwerkzeug-Hebevorrichtung 17 vertikal verfahren, das zweite Kalibrierwerkzeug 4b mittels einer zweiten Verschiebeeinheit 20 entlang dem zweiten Hubarm 17a in Querrichtung verschoben und das zweite Kalibrierwerkzeug 4b auf dem Aufspannrahmen 27 des Kalibriertisches 5 in Zentrierposition abgesetzt. Danach wird der zweite Hubarm 17a in seine Grundstellung verfahren und das zweite Kalibrierwerkzeug 4b durch Anheben des Aufspannrahmens 27 mit Kühlwasser- und Vakuumverbindungsleitungen 7, 8 verbunden. Während die Produktion gestartet wird, kann das zweite Manipulationsgerät 18 mit dem ersten Kalibrierwerkzeug 4a von der Produktionslinie entfernt werden.

Durch den Einsatz der Manipulationsgeräte 9, 18, welche selbstfahrend ausgeführt sein können, können weitere Transport- und Hebezeuge entfallen und Produktionsstillstände möglichst kurz gehalten werden.

Weist der Kalibriertisch 5 einen Aufspannrahmen 27 mit einer automatischen Kupplungseinheit 28 zur automatischen Entkoppelung und Koppelung der Kühlwasser- und Vakuumversorgungsleitungen 7, 8 auf, können weitere manuelle Arbeitsschritte eingespart und die Stillstandszeit weiter reduziert werden.

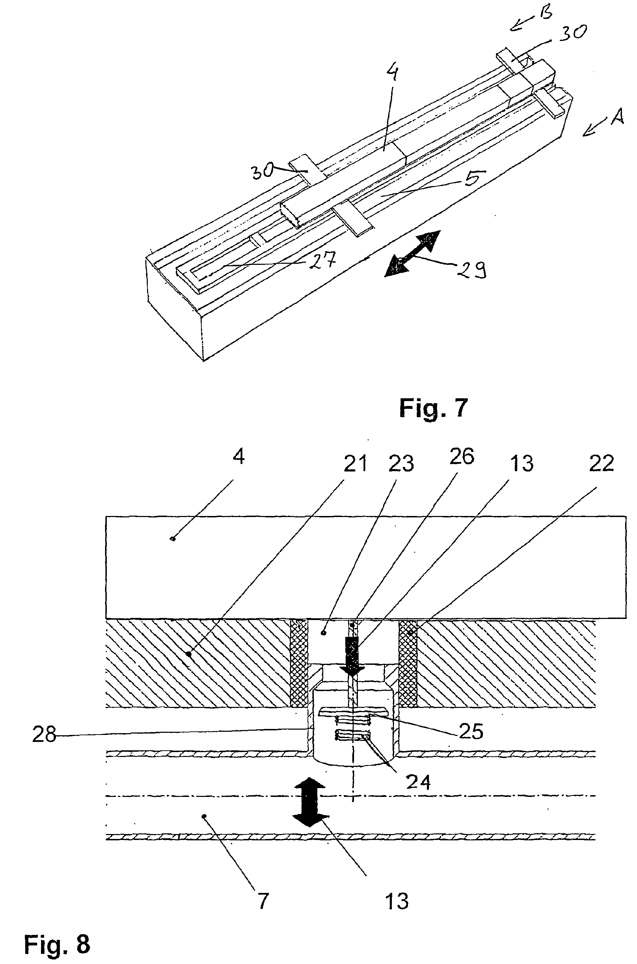

Fig. 7 zeigt einen Kalibrierwerkzeugwechselvorgang mit einem zweiten (hier nicht näher dargestellten) Manipulationsgerät, welches mit nur einer Kalibrierwerkzeughebevorrichtung ausgeführt ist, und bei dem der Kalibrierwerkzeugwechsel von einer Seite A zur anderen Seite B erfolgt, derart dass das Kalibrierwerkzeug 4 auf einer Querverschiebeeinheit 30, ausgeführt mit Rollenführung oder ähnlichem, nach Absenken des Aufspannrahmens 27 aufsitzt und dabei gleichzeitig die Entkoppelungen der Kühlwasser- und Vakuumverbindungsleitungen erfolgen, und das Kalibrierwerkzeug 4 quer zur Extrusionsrichtung 29 geschoben werden kann und anschließend auf einem - nicht weiter dargestellten - seitlich positionierten Werkzeugwechselwagen abgelegt werden kann. Nach dem Entfernen des ersten Kalibrierwerkzeuges aus dem Arbeitsraum kann sofort das zweite Kalibrierwerkzeug in den Arbeitsraum eingeschoben werden.

Fig. 8 zeigt eine derartige automatische Kupplungseinheit 28 im Detail. Mit Bezugszeichen 21 ist die Grundplatte des Kalibrierwerkzeuges 4 bezeichnet. Die Grundplatte 21 weist durch flexible Manschetten 22 abgedichtete Anschlussöffnungen 23 für Kupplungseinheiten 28 von Kühlwasser- oder Vakuumverbindungsleitungen 7, 8 auf. Innerhalb der Kupplungseinheit 28 ist eine durch z.B. eine Feder 24 belastete Ventilplatte 25 angeordnet. Wird das Kalibrierwerkzeug 4 und/oder der Aufspannrahmen 27 mit den Kühlwasserverbindungsleitungen 7 oder Vakuumverbindungsleitungen 8 in vertikaler Richtung entsprechend den Pfeilen 13 zueinander bewegt, wirkt ein kalibrierwerkzeugfester Dorn 26 auf die Ventilplatte 25 entgegen der Kraft der Feder 24 ein und öffnet somit die Kupplungseinheit 28.

Der Kalibriertisch 5 ist auf die maximal erforderliche Anzahl von Kühlwasser- und Vakuumversorgungsleitungen 7, 8 vorbereitet, während das Kalibrierwerkzeug 4 eine individuelle geringere Anzahl von Anschlussöffnungen 23 aufweisen kann. Die für die jeweilige Profilproduktion erforderlichen Anschlussverbindungen werden durch die Dorne 26 in der Grundplatte 21 aktiviert, während nicht benötigte Anschlussverbindungen inaktiv bleiben.

## Patentansprüche

1. Verfahren zur Herstellung von Kunststoffprofilen, bei dem zunächst ein erstes Profil hergestellt wird, indem ein Profilstrang (6) durch einen Extruder (2) extrudiert und in einer an den Extruder (2) angeschlossenen ersten Extrusionswerkzeugdüse (3a) geformt wird, sowie danach in einem auf einem Kalibriertisch (5) angeordneten ersten Kalibrierwerkzeug (4a) kalibriert und abgekühlt wird, wonach das erste Kalibrierwerkzeug (4a) vom Kalibriertisch (5) abgebaut und ein zweites Kalibrierwerkzeug (4b) aufgebaut wird, um anschließend ein zweites Profil herzustellen, wobei an das vom Kalibriertisch (5) angebaute Kalibrierwerkzeug (4) Kühlwasser- und/oder Vakuumversorgungsleitungen (7, 8) angeschlossen werden, ,wobei vor dem Abbauen des ersten Kalibrierwerkzeugs (4a) das zweite Kalibrierwerkzeug (4b) auf einem frei verfahrbaren Kalibrierwerkzeug-Manipulationsgerät (18) im Bereich des Kalibriertisches (5) bereitgestellt wird, danach das erste Kalibrierwerkzeug (4a) durch eine Kalibrierwerkzeug-Hebeeinrichtung (16, 17) des Kalibrierwerkzeug-Manipulationsgerätes (18) quer zur Extrusionsrichtung (12) vom Kalibriertisch (5) entfernt und das zweite Kalibrierwerkzeug (4b) durch die Kalibrierwerkzeug-Hebevorrichtung (16, 17) vorzugsweise quer zur Extrusionsrichtung (12) in die Andockstellung zum Kalibriertisch (5) gebracht wird, **dadurch gekennzeichnet, dass** beim Entfernen des ersten Kalibrierwerkzeuges (4a) vom Kalibriertisch (5) Kühlwasser- und/oder Vakuumversorgungsleitungen (7, 8) automatisch vom ersten Kalibrierwerkzeug (4a) getrennt und nach Verbringen des zweiten Kalibrierwerkzeuges (4b) in die Andockstellung zum Kalibriertisch (5) automatisch an das zweite Kalibrierwerkzeug (4b) angeschlossen werden.

2. Verfahren nach Anspruch 1, **dadurch gekennzeichnet, dass** das erste Kalibrierwerkzeug (4a) durch eine erste Kalibrierwerkzeug-Hebevorrichtung (16) des Kalibrierwerkzeug-Manipulationsgerätes (18) vom Kalibriertisch (5) entfernt wird und das zweite Kalibrierwerkzeug (4b) durch eine zweite Kalibrierwerkzeug-Hebevorrichtung (17) des Kalibrierwerkzeug-Manipulationsgerätes (18) in die Andockstellung zum Kalibriertisch (5) gebracht wird.

3. Verfahren nach einem der Ansprüche 1 oder 2, **dadurch gekennzeichnet, dass** die Entnahme des ersten Kalibrierwerkzeuges (4a) vom und das Zubringen des zweiten Kalibrierwerkzeuges (4b) zum Kalibriertisch (5) von der gleichen Längsseite des Kalibriertisches (5) erfolgt.

4. Verfahren nach einem der Ansprüche 1 oder 2, **dadurch gekennzeichnet, dass** die Entnahme des ersten Kalibrierwerkzeuges (4a) vom und das Zubringen des zweiten Kalibrierwerkzeuges (4b) zum Kalibriertisch (5) von verschiedenen Längsseiten des Kalibriertisches (5) erfolgt.

5. Vorrichtung zur Manipulation von Kalibrierwerkzeugen (4; 4a, 4b), die als fahrbares Kalibrierwerkzeug-Manipulationsgerät (18) ausgebildet ist, mit zumindest einer Düsen-Hebevorrichtung (10, 11) zur Aufnahme von Kalibrierwerkzeugen (4; 4a, 4b), **dadurch gekennzeichnet, dass** das Kalibrierwerkzeug (4; 4a, 4b) über eine automatische Kupplungseinheit (28) an Kühlwasserversorgungs- und/oder Vakuumversorgungsleitungen (7, 8) des Kalibriertisches (5) anschließbar sind.

6. Vorrichtung nach Anspruch 5, **dadurch gekennzeichnet, dass** die Kalibrierwerkzeug-Hebevorrichtung (16, 17) einen ersten Hubarm (16a) zur Aufnahme eines ersten Kalibrierwerkzeuges (4a) und einen zweiten Hubarm (17a) zur Aufnahme eines zweiten Kalibrierwerkzeuges (4b) aufweist.

7. Vorrichtung nach Anspruch 6, **dadurch gekennzeichnet, dass** der erste und der zweite Hubarm (16a, 17a) der Kalibrierwerkzeug-Hebevorrichtung (16, 17) unabhängig voneinander verfahrbar sind.

8. Vorrichtung nach einem der Ansprüche 5 bis 7, **dadurch gekennzeichnet, dass** das zweite Manipulationsgerät (18) am Kalibriertisch (5) andock- und fixierbar ausgebildet ist.

9. Vorrichtung nach einem der Ansprüche 5 bis 8, **dadurch gekennzeichnet, dass** das zweite Manipulationsgerät (18) zumindest eine Verschiebeeinheit (19, 20), vorzugsweise mit Rollen- oder Gleitlagerung, für das Kalibrierwerkzeug (4; 4a, 4b) aufweist.

10. Vorrichtung nach einem der Ansprüche 5 bis 9, **dadurch gekennzeichnet, dass** das zweite Manipulationsgerät (18) mit nur einer Hubeinrichtung ausgeführt ist und der Wechselvorgang mit einer Querverschiebeeinheit (30) unterstützt wird.

11. Vorrichtung nach einem der Ansprüche 5 bis 10, **dadurch gekennzeichnet, dass** die Querverschiebeeinheit (30) zwischen dem Kalibrierwerkzeug (4) und dem Aufspannrahmen (27) des Kalibriertisches (5) angeordnet ist und durch vertikales Absenken des Aufspannrahmens (27) das Kalibrierwerkzeug (4) auf der Querverschiebeeinheit (30) aufsitzt und **dadurch** die Kühlwasser- und Vakuumversorgungsleitungen (7, 8) getrennt werden.

12. Vorrichtung nach einem der Ansprüche 5 bis 11, **dadurch gekennzeichnet, dass** das erste und/oder zweite Manipulationsgerät (9, 18) selbstfahrend ausgebildet ist.

## Claims

1. A method for producing plastic profiles, in which a first profile is initially produced by extruding a profiled bar (6) through an extruder (2) and molding said profiled bar in a first extrusion die nozzle (3a) that is connected to the extruder (2), whereupon the profiled bar is calibrated in a first calibrating die (4a) arranged on a calibrating table (5) and is chilled, whereupon the first calibrating die (4a) is separated from the extruder (2) and a second calibrating die (4b) is attached in order to produce thereafter a second profile, with cooling water and/or vacuum supply lines (7, 8) being connected to the calibrating die (4) attached to the calibrating table (5), with the second calibrating die (4b) being made available on a freely movable manipulating device (18) for the calibrating die in the region of the calibrating table (5) prior to severing the first calibrating die (4a), whereupon the first calibrating die (4a) is removed from the calibrating table (5) by a lifting apparatus (16, 17) of the manipulating device (18) for the calibrating die transversally to the direction of extrusion (12) and the second calibrating die (4b) is brought to the calibrating table (5) to the docking position by the lifting apparatus (16, 17) for the calibrating die preferably transversally to the direction of extrusion (2), **characterized in that** upon removal of the first calibrating die (4a) from the calibrating table (5) cooling water and/or vacuum supply lines (7, 8) are severed automatically from the first calibrating die (4a) and, after transfer of the second calibrating die (4b) to the calibrating table (5) to the docking position, are connected automatically to the second calibrating die (4b).

2. A method according to claim 1, **characterized in that** the first calibrating die (4a) is removed from the calibrating table (5) by a first lifting apparatus (16) of the manipulating device (18) for the calibrating die and the second calibrating die (4b) is brought to the calibrating table (5) to the docking position by a second lifting apparatus (17) of the manipulating device (18) for the calibrating die.

3. A method according to one of the claims 1 or 2, **characterized in that** the removal of the first calibrating die (4a) from the calibrating table (5) and the delivery of the second calibrating die (4b) to the calibrating table (5) occurs from the same longitudinal side of the calibrating table (5).

4. A method according to one of the claims 1 or 2, **characterized in that** the removal of the first calibrating die (4a) from the calibrating table (5) and the delivery of the second calibrating die (4b) to the calibrating table (5) occurs from different longitudinal sides of the calibrating table (5).

5. An apparatus for manipulating calibrating dies (4; 4a, 4b) which is configured as a movable manipulating device (9) for the calibrating die, comprising at least one nozzle lifting apparatus (10, 11) for receiving calibrating dies (4; 4a, 4b), **characterized in that** the calibrating die (4; 4a, 4b) can be connected to the cooling water and/or vacuum supply lines (7, 8) of the calibrating table (5) by way of an automatic coupling unit (28).

6. An apparatus according to claim 5, **characterized in that** the lifting apparatus (16, 17) for the calibrating die comprises a first lifting arm (16a) for receiving a first calibrating die (4a) and a second lifting arm (17a) for receiving a second calibrating die (4b).

7. An apparatus according to claim 6, **characterized in that** the first and second lifting arm (16a, 17a) of the lifting apparatus (16,17) for the calibrating die are movable independent from each other.

8. An apparatus according to one of the claims 5 to 7, **characterized in that** the second manipulating device (18) is provided with a configuration so that it can be docked to the calibrating table (5) and can be fixed there.

9. An apparatus according to one of the claims 5 to 8, **characterized in that** the second manipulating device (18) comprises at least one displacement unit (19, 20), preferably with roller or slide bearing, for the calibrating die (4; 4a, 4b).

10. An apparatus according to one of the claims 5 to 9, **characterized in that** the second manipulating device (18) is provided with only one lifting device and the changing process is supported by a transversal displacement unit (30).

11. An apparatus according to one of the claims 5 to 10, **characterized in that** the transversal displacement unit (30) is arranged between the calibrating die (4) and the mounting frame (27) of the calibrating table (5), and the calibrating die (4) rests on the transversal displacement unit (30) by vertical lowering of the mounting frame (27) and the cooling water and vacuum supply lines (7, 8) are severed as a result.

12. An apparatus according to one of the claims 5 to 11, **characterized in that** the first and/or second manipulating device (9, 18) is provided with an automotive configuration.

## Revendications

1. Procédé de fabrication de profilés en matière plastique selon lequel on fabrique d'abord un premier profilé en extrudant un cordon profilé (6) avec une extrudeuse (2) et on met en forme par une première buse d'extrusion (3a) raccordée à l'extrudeuse (2) et ensuite, on calibre dans un premier outil de calibrage (4a) installé sur une table de calibrage (5), on refroidit puis on démonte le premier outil de calibrage (4a) de la table de calibrage (5) et on installe un second outil de calibrage (4b) pour fabriquer ensuite un second profilé, et on raccorde l'outil de calibrage (4) installé sur la table de calibrage (5) aux conduites d'eau de refroidissement et/ ou de vide (7, 8),
et avant de démonter le premier outil de calibrage (4a) on prépare le second outil de calibrage (4b) sur un appareil de manipulation d'outil de calibrage (18) mobile librement, dans la région de la table de calibrage (5) puis on enlève le premier outil de calibrage (4a) par une installation de levage d'outil de calibrage (16, 17) de l'appareil de manipulation d'outil de calibrage (18), transversalement à la direction d'extrusion (12) de la table de calibrage (5) et on place le second outil de calibrage (4b) avec le dispositif de levage d'outil de calibrage (16, 17), de préférence transversalement à la direction d'extrusion (12) en position d'amarrage sur la table de calibrage (5),
**caractérisé en ce que**
lorsqu'on enlève le première outil de calibrage (4a) de la table de calibrage (5), on sépare automatiquement les conduites d'alimentation d'eau de refroidissement et/ou de vide (7, 8) du premier outil de calibrage (4a) et après mise en place du second outil de calibrage (4b) en position d'amarrage, sur la table de calibrage (5), on raccorde automatiquement au second outil de calibrage (4b).

2. Procédé selon la revendication 1,
**caractérisé en ce qu'**
on enlève le premier outil de calibrage (4a) de la table de calibrage (5) à l'aide d'un premier dispositif de levage d'outil de calibrage (16) de l'appareil de manipulation (18) et on met le second outil de calibrage (4b) en position d'amarrage sur la table de calibrage (5) par un second dispositif de levage d'outil de calibrage (17) de l'appareil de manipulation d'outil de calibrage (18).

3. Procédé selon l'une des revendications 1 ou 2,
**caractérisé en ce que**
l'enlèvement du premier outil de calibrage (4a) par rapport à la table de calibrage (5) et l'amenée du second outil de calibrage (4b) par rapport à la table de calibre (5) se font par le même grand côté de la table de calibrage (5).

4. Procédé selon l'une des revendications 1 ou 2,
**caractérisé en ce que**
l'enlèvement du premier outil de calibrage (4a) par rapport à la table de calibrage (5) et l'amenée du second outil de calibrage (4b) par rapport à la table de calibrage (5) se font par des grands côtés différents de la table de calibrage (5).

5. Dispositif de manipulation d'outil de calibrage (4 ; 4a, 4b) réalisé sous la forme d'un appareil de manipulation d'outil de calibrage (18), mobile, ayant au moins un dispositif de levage de buses (10, 11) pour recevoir des outils de calibrage (4 ; 4a, 4b),
**caractérisé en ce que**
l'outil de calibrage (4 ; 4a, 4b) est raccordé aux conduites d'alimentation en eau de refroidissement et/ ou de vide (7, 8) de la table de calibrage (5) par une unité d'accouplement automatique (28).

6. Dispositif selon la revendication 5,
**caractérisé en ce que**
le dispositif de levage d'outil de calibrage (16, 17) comporte un premier bras de levage (16a) pour recevoir un premier outil de calibrage (4a) et un second bras de levage (17a) pour recevoir un second outil de calibrage (4b).

7. Dispositif selon la revendication 6,
**caractérisé en ce que**
le premier et le second bras de levage (16a, 17a) du dispositif de levage d'outil de calibrage (16, 17) sont mobiles indépendamment l'un de l'autre.

8. Dispositif selon l'une des revendications 5 à 7,
**caractérisé en ce que**
le second appareil de manipulation (18) peut être accosté à la table de calibrage (5) et y être fixé.

9. Dispositif selon l'une des revendications 5 à 8,
**caractérisé en ce que**
le second appareil de manipulation (18) comporte au moins une unité de translation (19, 20), de préférence avec des paliers à galets ou paliers lisses pour l'outil de calibrage (4 ; 4a, 4b).

10. Dispositif selon l'une des revendications 5 à 9,
**caractérisé en ce que**
le second appareil de manipulation (18) est réalisé seulement par une installation de levage et l'opération de changement est assistée par une unité de coulissement transversal (30).

11. Dispositif selon l'une des revendications 5 à 10,
**caractérisé en ce que**
l'unité de coulissement transversal (30) est installée entre l'outil de calibrage (4) et le châssis de serrage (27) de la table de calibrage (5) en reposant sur l'unité de coulissement transversal (30) par abaissement vertical du châssis de serrage (17) de l'outil de calibrage (4) pour être ainsi séparée des conduites d'alimentation en eau de refroidissement et de vide (7, 8).

12. Dispositif selon l'une des revendications 5 à 11,
**caractérisé en ce que**
le premier et/ou le second appareil de manipulation (9, 18) sont automoteurs.
